# EUROPÄISCHE PATENTSCHRIFT

(11) **EP 3 009 244 B1**
(45) Veröffentlichungstag und Bekanntmachung des Hinweises auf die Patenterteilung: **26.04.2017**
(21) Anmeldenummer: 15189723.8
(22) Anmeldetag: 14.10.2015
(51) Int. Cl.: B27C 5/06, B27M 1/08, B23Q 7/18

(54) **ZUFÜHRVORRICHTUNG FÜR EINE FORMATBEARBEITUNGS- UND/ODER KANTENAUFBRINGMASCHINE, FORMATBEARBEITUNGS- UND/ODER KANTENAUFBRINGMASCHINE SOWIE VERFAHREN**
FEEDING DEVICE FOR A FORMAT PROCESSING AND/OR EDGING MACHINE, FORMAT PROCESSING AND/OR EDGING MACHINE AND METHOD
DISPOSITIF D'AMENEE POUR UNE MACHINE DE FAÇONNAGE ET/OU LE PLAQUAGE DE CHANT, MACHINE DE FAÇONNAGE ET/OU DE PLAQUAGE DE CHANT ET PROCEDE

(30) Priorität: 16.10.2014 DE 102014221008
(43) Veröffentlichungstag der Anmeldung: 20.04.2016
(73) Patentinhaber: HOMAG GmbH, 72296 Schopfloch (DE)
(72) Erfinder: Rathgeber, Peter, 72280 Dornstetten (DE)
(74) Vertreter: Hoffmann Eitle

(56) Entgegenhaltungen:
- EP-A1- 1 479 492
- EP-A1- 2 253 441
- EP-A1- 2 253 442
- CH-A- 536 698
- DE-A1- 3 447 703
- DE-A1- 4 234 681
- DE-A1-102013 012 422
- DE-U1- 8 114 121
- IT-A1- RN20 120 053
- US-A1- 2010 154 933

## Beschreibung

### Technisches Gebiet

Die vorliegende Erfindung betrifft eine Vorrichtung gemäß dem Oberbegriff des Anspruchs 1 und ein Verfahren gemäß dem Oberbegriff des Anspruchs 11 zur Zuführung von bevorzugt plattenförmigen Werkstücken, sowie eine Formatbearbeitungs- und/oder Kantenaufbringmaschine mit einer solchen Zuführvorrichtung. Eine solche Zuführvorrichtung und ein solches Verfahren sind aus der EP 2 253 442 A1 bekannt. Die genannten Werkstücke sind beispielsweise aus Holz bzw. umfassen Holzwerkstoffe oder Kunststoff. Die Zuführvorrichtung bzw. die Formatbearbeitungs- und/oder Kantenaufbringmaschine kommen dabei insbesondere im Bereich der Möbel- und Bauelementeindustrie zum Einsatz. Darüber hinaus betrifft die vorliegende Erfindung ein Verfahren.

### Stand der Technik

Einseitige Formatbearbeitungs- und/oder Kantenaufbringmaschinen zur aufeinanderfolgenden mehrseitigen Kantenbearbeitung von Werkstücken sind im Allgemeinen bereits bekannt. Üblicherweise wird während eines ersten Durchlaufs ein Werkstück an einem ersten Lineal an der festen Maschinenseite ausgerichtet, und das Werkstück in einem zweiten Durchlauf an einem zweiten Lineal an der beweglichen Maschinenseite geführt. Auch ist es möglich, beide Durchläufe zur Aufbringung von gegenüberliegenden Kanten an einem Lineal der beweglichen Maschinenseite durchzuführen.

Als weitere Alternative ist es bekannt, während eines ersten Durchlaufs und Ausrichtung des Werkstücks an der Maschinenseite gleichzeitig auf der beweglichen Maschinenseite das Werkstück parallel auf Maß zu fräsen. Der zweite Durchlauf des Werkstücks wird ebenfalls am Lineal der festen Maschinenseite an der bereits gefrästen Referenzkante durchgeführt. In den darauffolgenden beiden Durchläufen wird das Werkstück winkelgerecht mittels Klinken oder Nockenschienen einem Positionsanschlag zugeführt, sodass ein definiertes Quermaß hergestellt wird.

Beispielsweise ist eine Vorrichtung gemäß DE 81 14 121 U1 bekannt, die auf eine kontinuierlich arbeitende einseitige Format- und/oder Kantenanleimmaschine zum aufeinanderfolgenden vierseitige Kantenbearbeiten von plattenförmigen Werkstücken gerichtet ist. Diese Vorrichtung umfasst mindestens einen Anschlag und mindestens ein Lineal zum maß- sowie winkelgerechten Anordnen der Werkstücke, sowie einen parallel zur Werkstückdurchlaufrichtung hin- und her verschiebbaren Schlitten, auf dem der Anschlag und das Lineal befestigt sind. Das Lineal ist um eine vertikale Achse schwenkbar und in vorgegebenen Winkellagen auf einem Schlitten festlegbar.

### Gegenstand der Erfindung

Ziel der vorliegenden Erfindung ist es, eine Vorrichtung bereitzustellen, mit der bevorzugt plattenförmige Werkstücke in Losgröße 1 mit ggf. unterschiedlichen Längen und Breiten maß- und winkelgenau einer Bearbeitungsmaschine zugeführt werden können.

Der Gegenstand von Anspruch 1 stellt hierfür eine Lösung bereit. Weitere bevorzugte Ausführungsformen, die jeweils einzeln miteinander kombiniert werden können, finden sich in den abhängigen Ansprüchen. Ferner stellt die vorliegende Erfindung ein Verfahren bereit.

Kerngedanke der vorliegenden Erfindung ist ein Ausrichtmechanismus, der gemäß einer ermittelten Schräge einer zu bearbeitenden und/oder zu beschichtenden Seite eines Werkstücks relativ zu einer Referenzseite einstellbar ist. Auf diese Weise kann jedes einzelne Werkstück im Bereich einer Zuführvorrichtung derart ausgerichtet, dass die nachfolgende Bearbeitung, beispielsweise spanendes Bearbeiten und/oder Kantenaufbringen, am exakt vorpositionierten Werkstück durchgeführt werden kann.

Die vorliegende Zuführvorrichtung hat den Vorteil, dass Werkstücke stets an der festen Maschinenseite ausgerichtet werden können, wo das zumindest eine Einlauflineal am stabilsten aufgenommen werden kann. Somit ist keine Positionierung an einem Lineal oder Anschlag an der beweglichen Maschinenseite erforderlich.

Ferner muss ein Werkstück nicht an der Dekorkante (Seite mit bereits aufgebrachtem Kantenmaterial) an einem Lineal bzw. Positionieranschlag angelegt bzw. geführt werden, wie dies im Stand der Technik üblich war. Aus diesem Grund werden Kratzer, Glanzspuren, Beschädigung der Schutzfolien, usw. vermieden, und ein qualitativ hochwertiges Bearbeitungsergebnis gewährleistet.

Ferner stellt die vorliegende Erfindung eine relativ kostengünstige Lösung bereit, da kein Referenzfräser, Portal für einen Positionieranschlag oder verstellbares Längslineal an der beweglichen Maschinenseite bereitgestellt werden muss.

Da nur relativ geringe Verstellbewegungen am zumindest einen Einlauflineal erforderlich sind, können höchste Taktleistungen und Vorschübe für die Losgröße 1-Fertigung erreicht werden.

Ferner können durch die variable Mechanik die Werkstücklücken weiter reduziert werden, wodurch gepaart mit der gesteigerten Durchlaufgeschwindigkeit die Produktionsleistung weiter gesteigert werden kann.

Bevorzugt ist eine Steuereinrichtung eingerichtet, das zumindest eine Einlauflineal gemäß einer in einem vorangegangen Durchlauf des Werkstücks ermittelten Breite horizontal zu verstellen und gemäß einer in einem vorangegangen Durchlauf des Werkstücks ermittelten Schräge in der horizontalen Ebene zu drehen. Auf diese Weise wird eine sichere Ausrichtung und Führung der Werkstücke erreicht.

Dabei kann die Steuereinrichtung eingerichtet sein, das zumindest eine Einlauflineal nach Ausrichtung eines Werkstücks in Abhängigkeit von der Fördergeschwindigkeit des Werkstücks zu führen, insbesondere das zumindest eine Einlauflineal in horizontaler Richtung zu verstellen.

In einer weiteren Variante sind mehrere, insbesondere drei, jeweils in einer horizontalen Richtung verstellbare und zur Durchlaufrichtung in der horizontalen Ebene drehbare Einlauflineale vorgesehen sind, so dass ein sicheres Ausrichtung bei kürzerem Arbeitstakt möglich ist.

Bevorzugt weist die Zuführvorrichtung ferner eine erste Messeinrichtung auf, die eingerichtet ist, ein Breitenmaß eines Werkstücks und eine Schräge einer Seite des Werkstücks längs zur Durchlaufrichtung zu erfassen.

Ferner kann die Zuführvorrichtung eine zweite Messeinrichtung umfassen, die eingerichtet ist, die Schräge einer Seite des Werkstücks quer zur Durchlaufrichtung zu erfassen, wobei die zweite Messeinrichtung bevorzugt einen ersten Sensor (30) und einen zweiten Sensor umfasst, die entlang einer senkrecht zur Durchlaufrichtung verlaufenden, imaginären Linie angeordnet sind.

In einer weiteren Ausgestaltung kann die Zuführvorrichtung eine dritte Messeinrichtung umfassen, die eingerichtet ist, die Werkstückbreite nach Bearbeitung einer Seite des Werkstücks, insbesondere nach einer spanenden Bearbeitung und/oder einem Kantenaufbringen, zu ermitteln. Diese dritte Messeinrichtung wird somit zur sogenannten Kantenkompensation verwendet.

Gemäß einer weiteren Ausgestaltung weist die Zuführvorrichtung eine vierte Messvorrichtung auf, die eingerichtet ist, eine Werkstückbreite und/oder eine Schräge einer Seite des Werkstücks längs zur Durchlaufrichtung zu erfassen, wobei die vierte Messeinrichtung in einem Bereich angeordnet ist, bevor das Werkstück der Formatbearbeitungs- und/oder Kantenaufbringmaschine übergeben wird. Die vierte Messeinrichtung kann somit zur Feinjustierung der Ausrichtung verwendet werden.

### Kurze Beschreibung der Figuren

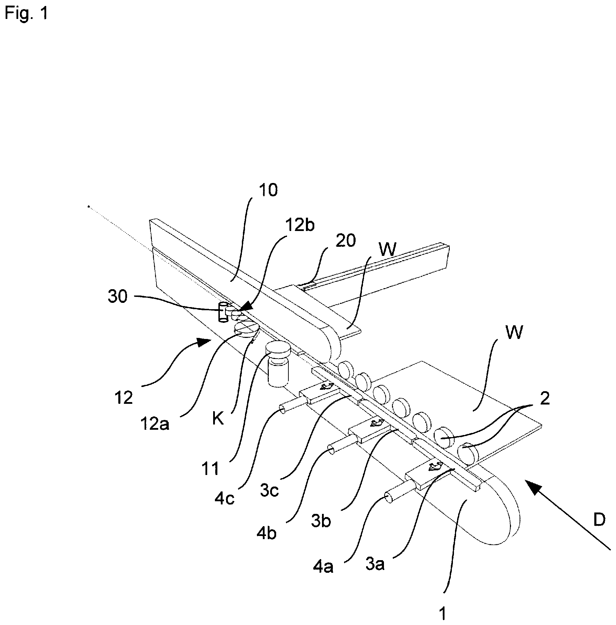

- Fig. 1: zeigt einen ersten Durchlauf plattenförmiger Werkstücke durch eine Vorrichtung gemäß einer Ausführungsform der vorliegenden Erfindung
- Fig. 2: zeigt einen zweiten Durchlauf der Werkstücke durch eine Vorrichtung gemäß der Ausführungsform der vorliegenden Erfindung

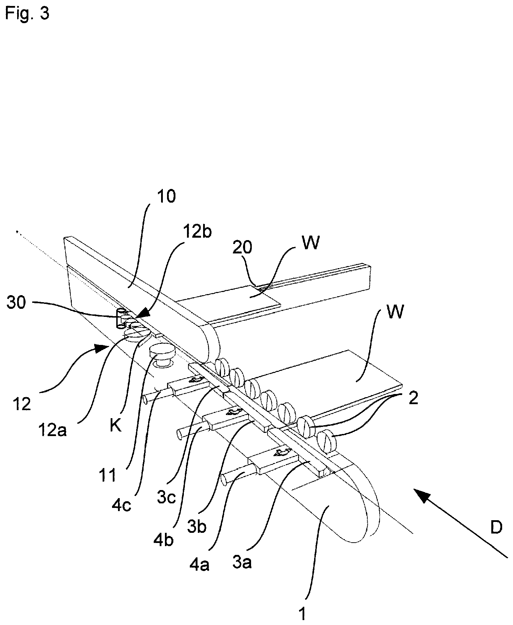

- Fig. 3: zeigt einen dritten Durchlauf der Werkstücke durch eine Vorrichtung gemäß der Ausführungsform der vorliegenden Erfindung
- Fig. 4: zeigt einen vierten Durchlauf der Werkstücke durch eine Vorrichtung gemäß der Ausführungsform der vorliegenden Erfindung
- Fig. 5: zeigt eine Ausführungsform der vorliegenden Erfindung im zweiten Durchlauf, bei der ein zusätzlicher Sensor vorgesehen ist.
- Fig. 6: zeigt eine Figur 5 entsprechende Ansicht der zweiten Ausführungsform im vierten Durchlauf.
- Fig. 7: veranschaulicht einen Ausrichtvorgang mit einer erfindungsgemäßen Zuführvorrichtung.
- Fig. 8: zeigt weitere Verfahrensschritte, die sich an den Ablauf von Figur 7 anschließen.
- Fig. 9: ist eine Draufsicht auf eine erfindungsgemäße Vorrichtung mit verschiedenen Messeinrichtungen.

### Detaillierte Beschreibung der bevorzugten Ausführungsformen

Nachfolgend werden anhand der beigefügten Figuren eine Vorrichtung sowie ein Verfahrensablauf unter Einsatz einer Ausführungsform der vorliegenden Erfindung sowie Modifikationen hiervon erläutert. Einzelmerkmale jeweiliger Weiterbildungen der beschriebenen Ausführungsform können einzeln miteinander kombiniert werden, um neue Ausführungsformen auszubilden.

"Längsorientiert" bedeutet vorliegend eine Ausrichtung des Werkstücks derart, dass die längeren Seiten des Werkstücks in Durchlaufrichtung D weisen. "Querorientiert" hingegen kennzeichnet eine um 90° gedrehte Ausrichtung (die ggf. kürzere Querseite eines Werkstücks zeigt in Durchlaufrichtung D). Selbstverständlich können mit der vorliegenden Formatbearbeitungs- und/oder Kantenaufbringmaschine aber auch quadratische Werkstücke bearbeitet werden. Auch ist die nachfolgend beschriebene Reihenfolge aus Längs- und Querorientierung im Zuge der aufeinanderfolgenden Durchläufe nicht einschränkend zu verstehen, sondern kann auch in einer anderen Reihenfolge ablaufen.

Die vorliegende Ausführungsform zeigt eine einseitige Formatbearbeitungs- und/oder Kantenaufbringmaschine mit einer Zuführeinrichtung. Dies bedeutet, dass in einem Durchlauf eine Seite des Werkstücks bearbeitet und/oder mit einem Kantenmaterialstreifen versehen wird.

Die Zuführvorrichtung mit der Formatbearbeitungs- und/oder Kantenaufbringmaschine umfasst eine in vertikaler Richtung untere Fördereinrichtung 1, die ein endlos umlaufendes Förderelement, beispielsweise einen Förderriemen oder eine Förderkette, umfasst. In der vorliegenden Ausführungsform erstreckt sich die Fördereinrichtung 1 derart in horizontaler Richtung, dass die Fördereinrichtung 1 auch für die Zuführung von Werkstücken in die eigentliche Formatbearbeitungs- und/oder Kantenaufbringmaschine genutzt wird. Für die Zuführung von Werkstücken kann jedoch auch ein von der Fördereinrichtung 1 separat angeordneter Fördermechanismus bereitgestellt werden.

Im Bereich der Zuführeinrichtung befinden sich in vertikaler Richtung oberhalb der unteren Fördereinrichtung 1 mehrere Einzugsrollen 2. Die Einzugsrollen 2 können die Werkstücke gegen die Einlauflineale 3a-3c schieben.

Zwischen den Einzugsrollen 2 und dem Förderelement, bspw. dem Förderriemen bzw. der Förderkette, der unteren Fördereinrichtung 1 können Werkstücke gehalten und in Durchlaufrichtung D gefördert werden. Zum Halten der Werkstücke wird eine gewisse Klemmkraft aufgebracht.

Gleichzeitig werden die Werkstücke W gegen die nachfolgend erläuterten Einlauflineale 3a-3c gedrückt.

An einer Seite der Einzugsrollen 2 befinden sich in der vorliegenden Ausführungsform drei in Durchlaufrichtung D hintereinander angeordnete Einlauflineale 3a-3c, die einzeln in horizontaler Richtung mittels jeweiligen Antrieben 4a-4c verschoben und um eine in vertikaler Richtung ausgerichtete Drehachse geschwenkt werden können. Die drei Einlauflineale 3a-3c sind jeweils einzeln ansteuerbar, und können zusätzlich zur horizontalen Zustellbewegung relativ zur Durchlaufrichtung D (Förderrichtung) der Werkstücke W in der horizontalen Ebene gedreht werden.

Die vorliegende Ausführungsform kann in weiteren Modifikationen auch weniger oder mehr Einlauflineale aufweisen, beispielsweise auch nur ein Einlauflineal.

In Durchlaufrichtung D nach den Einzugsrollen 2 sowie den Einlauflinealen 3a-3c befindet sich die eigentliche Formatbearbeitungs- und/oder Kantenaufbringmaschine mit einem in vertikaler Richtung oberhalb der Fördereinrichtung 1 angeordneten Oberdruck 10, der mit einem endlos umlaufenden Förderelement ein Werkstück W gegen das Förderelement der Fördereinrichtung 1 drückt und in Durchlaufrichtung D fördert. Gegenüber den Einzugsrollen 2 bringt der Oberdruck 10 eine höhere Druckkraft am Werkstück auf, um das Werkstück während der Bearbeitung im Bereich der Seiten sicher zu halten.

Auf der gleichen Seite wie die Einlauflineale 3a-3c (Maschinenseite) in Bezug auf die untere Fördereinrichtung 1 ist ein spanend arbeitendes Werkzeug 11 vorgesehen, insbesondere ein Fräser. Das Werkzeug 11 ist dazu eingerichtet, eine Seite eines Werkstücks W, welches zwischen dem Förderelement der Fördereinrichtung 1 und dem Förderelement des Oberdrucks 10 gehalten und geführt wird, spanend zu bearbeiten.

In Durchlaufrichtung D nach dem spanend arbeitenden Werkzeug 11 befindet sich eine Kantenaufbringstation 12, mit der ein Kantenbandstreifen K auf einer Seite eines Werkstücks W aufgebracht wird. Dieser Kantenbandstreifen K wird mit einer nicht dargestellten Schneideinrichtung auf Maß geschnitten und über eine Andrückrolle 12a sowie im vorliegenden Beispiel über mehrere weitere Rollen 12b gegen die Seite eines Werkstücks W angedrückt und auf diese Weise mit diesem verbunden.

Die Formatbearbeitungs- und/oder Kantenaufbringmaschine umfasst ferner eine erste Messeinrichtung 20, um ein Breitenmaß der Werkstücke W und eine Schräge einer Seite der Werkstücke W zu ermitteln. Die Messeinrichtung 20 ist im vorliegenden Ausführungsbeispiel im Wesentlichen gegenüber der Kantenaufbringstation 12 angeordnet (Maschinenseite) und senkrecht zur Durchlaufrichtung beweglich. Bevorzugt ist die erste Messeinrichtung 20 ein Kontaktsensor. Die erste Messeinrichtung 20 kann jedoch auch als kontaktlos arbeitender Sensor ausgebildet sein.

Die erste Messeinrichtung 20 ist eingerichtet, ein Breitenmaß eines Werkstücks W und eine Schräge einer Seite des Werkstücks W längs zur Durchlaufrichtung D zu erfassen. Die genannte Seite des Werkstücks ist diejenige Seite, die im nächsten Durchlauf bearbeitet und/oder mit einem Kantenmaterialstreifen versehen werden soll.

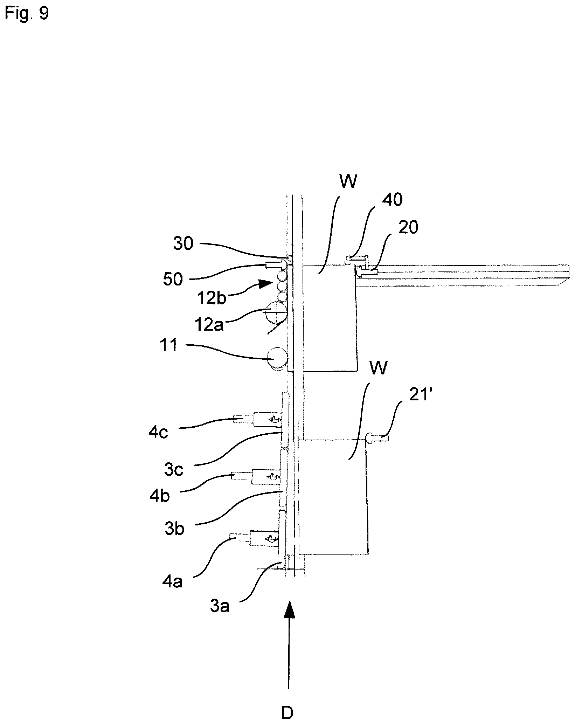

Ferner ist eine zweite Messeinrichtung 30, 40 vorgesehen (siehe hierzu auch Figur 9), die einen ersten Sensor 30 sowie einen zweiten Sensor 40 umfasst. Die zweite Messeinrichtung 30, 40 ist in der vorliegenden Ausführungsform in Durchlaufrichtung D nach der Kantenaufbringstation 12 vorgesehen.

Der erste Sensor 30 sowie der zweite Sensor 40 der zweiten Messeinrichtung sind an einer imaginären Linie angeordnet, die sich quer zur Durchlaufrichtung erstreckt. Nachdem jeder der Sensoren 30, 40 Bereiche einer Querseite des Werkstücks W ermittelt, kann hieraus die Schräge der Querseite des Werkstücks W berechnet werden. Um ein optimales Ergebnis zu erreichen, sind die Sensoren 30, 40 derart angeordnet, dass die erfassten Bereiche der Querseite des Werkstücks relativ weit voneinander beabstandet sind. Mit anderen Worten werden Bereiche der Querseite des Werkstücks W erfasst, die im Bereich der Kanten des Werkstücks W liegen.
Ferner umfasst die gezeigte Vorrichtung eine dritte Messeinrichtung 50, die zur Kantenkompensation (u.a. Materialabweichungen des aufgebrachten Kantenstreifens usw.) optional zum Einsatz kommen kann.

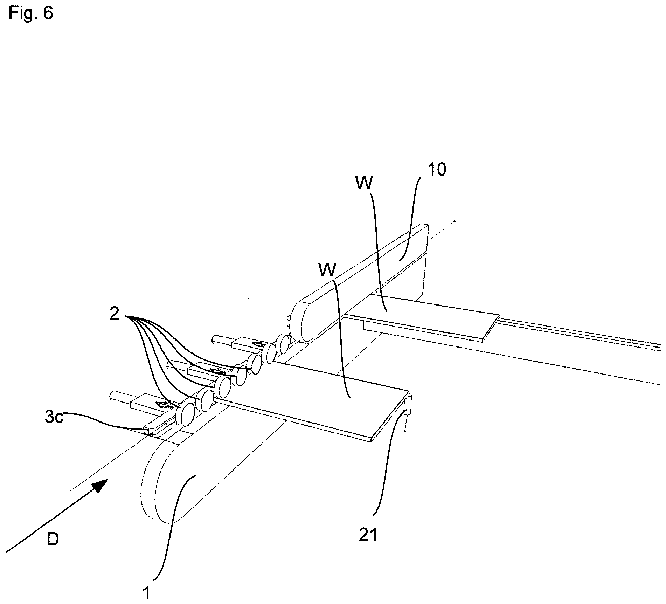

Darüber hinaus ist in Figur 6 eine taktile vierte Messeinrichtung 21 vorgesehen, die zur Feinjustierung bei der Ausrichtung eines Werkstücks vor der Übergabe in den Bearbeitungsbereich verwendet werden kann.

Die Funktionalität der Messeinrichtungen sowie die Bearbeitung eines Werkstücks in vier Durchläufen werden nachfolgend im Detail erläutert.

Zunächst wird ein Werkstück W in einem ersten Durchlauf längsorientiert zugeführt, wobei die Einlauflineale 3a-3c eine Referenzebene bilden. Die Referenzebene ist im ersten Durchlauf entsprechend der Durchlaufrichtung D ausgerichtet.

Die Einzugsrollen 2 führen ein Werkstück an den Einlauflinealen 3a-3c entlang, sodass dieses ausgerichtet dem Oberdruck 10 übergeben wird. Im Bereich des Oberdrucks 10 wird das Werkstück mit deutlich höherer Kraft in vertikaler Richtung gehalten und weiter in Durchlaufrichtung D gefördert. Indem das Werkstück W am Bearbeitungswerkzeug 11 vorbeigeführt wird, kann das Bearbeitungswerkzeug 11 eine erste Seite des Werkstücks W bearbeiten, insbesondere eine plane Seite erstellen. Nachfolgend wird ein Kantenmaterialstreifen K auf dieser zuvor durch das Bearbeitungswerkzeug 11 bearbeiteten ersten Seite des Werkstücks W aufgebracht.

Ferner wird beim ersten Durchlauf ein Breitenmaß und eine Schräge einer zweiten Seite des Werkstücks W in Relation zur bereits bearbeitenten, gegenüberliegenden ersten Seite durch die erste Messeinrichtung 20 erfasst. Dieses Maß wird für die weitere Bearbeitung des Werkstücks W im nachfolgend beschriebenen zweiten Durchlauf verwendet. Auf der sogenannten Bearbeitungsseite kann die angeleimte Kante mit dem Werkstücküberstand zusätzlich mittels des Sensors 50 gemessen werden (Kantenkompensation).

Im zweiten Durchlauf wird das Werkstück W um 180 Grad um gedreht, sodass eine der bereits bearbeiteten ersten Seite gegenüberliegende zweite Seite des Werkstücks W bearbeitet und mit einer Kante versehen werden kann.

Hierzu wird das Werkstück W längsorientiert zugeführt. Die Einlauflineale 3a-3c werden gemäß der im ersten Durchlauf erfassten Schräge und Breite der zu bearbeitenten zweiten Seite gegenüber der bereits bearbeitenden ersten Seite angestellt (horizontal verstellt und um vertikale Achse gedreht), damit nach erfolgter Ausrichtung des Werkstücks durch das Bearbeitungswerkzeug 11 eine zur ersten Seite parallele Seite ausgebildet werden kann.

Bevor das Werkstück W unter den Oberdruck 10 gefördert wird, beginnen sich die einzelnen Einlauflineale 3a-3c orthogonal zur Förderrichtung in Abhängigkeit von der Fördergeschwindigkeit derart zu verstellen, dass mit dem feststehenden Bearbeitungswerkzeug 11 ein paralleles und maßhaltiges Werkstück erzeugt werden kann.

Im Bereich des Oberdrucks 10 wird ferner die Querseite des Werkstücks mittels der zwei Messeinrichtungen (Sensoren), 30, 40 gemessen, um die Schräge einer dritten Seite des Werkstücks W in Relation zur ersten und/oder zweiten Seite des Werkstücks W zu erfassen. Hierzu kann die erste Messeinrichtung 20 während des Durchlaufs die Querseite erfassen bzw. abtasten. Diese Information wird zur neuen Ausrichtung des Werkstücks W im nachfolgend beschriebenen dritten Durchlauf verwendet.

Im dritten Durchlauf wird das Werkstück W querorientiert zugeführt, so dass die dritte Seite am Bearbeitungswerkzeug 11 und der Kantenaufbringstation 12 vorbeigeführt werden kann. Die Einlauflineale 3a-3c werden gemäß der im zweiten Durchlauf ermittelten Schräge der dritten Seite des Werkstücks W angestellt. Dabei beginnen sich die Einlauflineale 3a-3c derart orthogonal zur Durchlaufrichtung D in Abhängigkeit der Fördergeschwindigkeit zu verstellen, dass die Winkligkeit des Werkstücks W ausgeglichen wird. Mit anderen Worten kann gemäß der Ausrichtung des Werkstücks W durch den Einsatz des feststehenden Bearbeitungswerkzeugs 11 ein 90 Grad-Winkel gegenüber den bereits bearbeiteten ersten und zweiten Seiten erreicht werden. Durch Einsatz der ersten Messeinrichtung 20 wird im Zuge des dritten Durchlaufs zum einen das Längenmaß erfasst, und zum anderen die Schräge der vierten Seite des Werkstücks zur dritten Seite des Werkstücks W ermittelt. An der Bearbeitungsseite kann die angeleimte Kante mit dem Werkstücküberstand zusätzlich mittels des Sensors 50 gemessen werden (Kantenkompensation).

Nachfolgend wird der vierte Durchlauf durchgeführt. Dabei wird das Werkstück W derart querorientiert zugeführt, dass die noch nicht bearbeitete vierte Seite des Werkstücks W in Richtung der Einlauflineale 3a-3c weist, und die Einlauflineale 3a-3c werden gemäß der zuvor ermittelten Schräge der vierten Seite des Werkstücks angestellt. Bevor das Werkstück W unter den Oberdruck 10 gefördert wird, beginnen sich die Einlauflineale 3a-3c orthogonal zur Durchlaufrichtung D in Abhängigkeit der Fördergeschwindigkeit derart zu verstellen, dass das Werkstück in einer korrekten Ausrichtung zum Bearbeitungswerkzeug 11 geführt werden kann. Nachfolgend wird die vierte Seite des Werkstücks W mit dem Bearbeitungswerkzeug bearbeitet, und ein Kantenmaterialstreifen an der vierten Seite des Werkstücks W aufgebracht.

In einer weiteren Modifikation der vorliegenden Erfindung ist es bei extremen Längs- bzw. Querabmessungen von Werkstücken möglich, die Zuführung der Werkstücke W durch ein Klinken- oder Nockensystem zu unterstützen, wobei die Werkstücke durch einen oder mehrere Nocken verschoben werden.

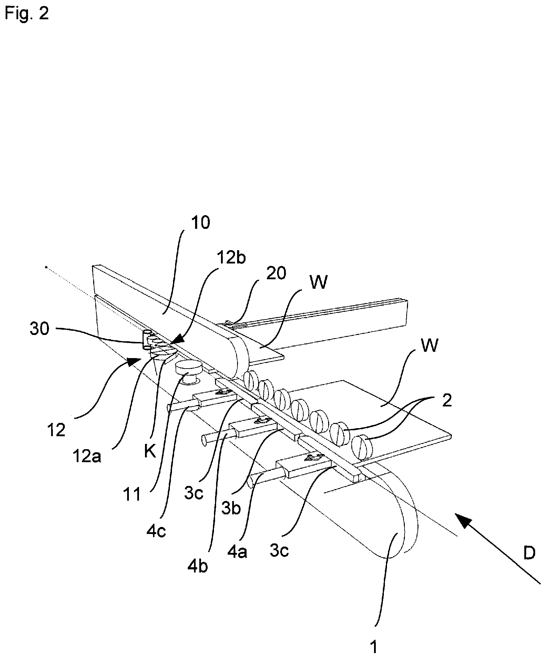

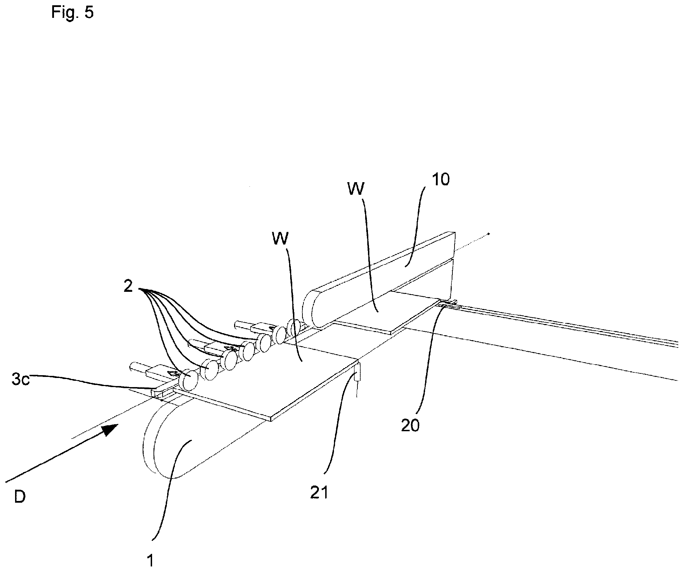

Fig. 5 zeigt einen zweiten Durchlauf (entsprechend Fig. 2) gemäß einer zweiten Ausführungsform der vorliegenden Erfindung. Zusätzlich zur ersten Ausführungsform ist eine vierte Messeinrichtung 21 (kontaktloser Sensor) gegenüberliegend den Einlauflinealen 3a-3c vorgesehen. Mit dem Sensor 21 wird die Parallelität und die Breite des Werkstücks kurz vor der Übergabe des Werkstücks W zum Oberdruck 10 erfasst und ggf. eine Einstellung der Einlauflineale 3a-3c, oder ggf. lediglich des in Durchlaufrichtung nachrangig angeordneten Einlauflineals 3c vorgenommen. Auf diese Weise kann eine Feinjustierung bzw. Nachregelung der Ausrichtung der Einlauflineale 3a-3c durchgeführt werden, bevor das Werkstück W mittels des Oberdrucks 11 geklemmt und anschließend bearbeitet wird.

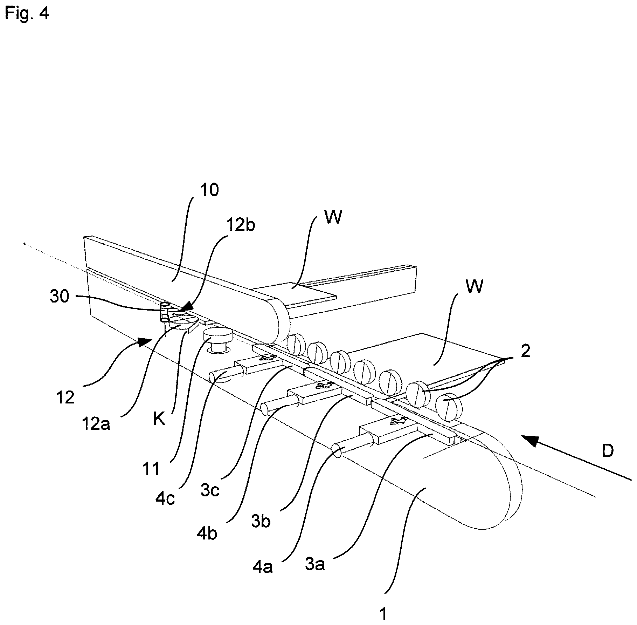

Fig. 6 zeigt die zweite Ausführungsform im vierten Durchlauf (gemäß Fig. 4), wobei wiederum der Sensor 21 zum Einsatz kommt.

In den zuvor beschriebenen Ausführungsformen sind die Messeinrichtungen 20, 50 als taktile Messsysteme ausgeführt.

Die vorliegende Erfindung ist jedoch nicht auf den Einsatz taktiler Messsysteme beschränkt, sondern eine Messung kann bei einem oder mehreren der genannten Messeinrichtungen 20, 50 berührungslos, insbesondere mittels digitaler Bildverarbeitung oder einer Lasermesseinrichtung durchgeführt werden.

Auch die Sensoren 30, 40 der zweiten Messeinrichtung können sowohl als Kontaktsensoren (taktiles Messsystem) als auch als berührungslose Sensoren ausgeführt sein.

Ferner ist der Sensor 21 in der in Figur 5 und 6 dargestellten Ausführungsform ein berührungsloser Sensor. Anstelle des Sensor 21 kann jedoch auch ein Kontaktsensor 21' zum Einsatz kommen (taktiles Messsystem), der in Zusammenhang mit Figur 9 nochmals erläutert wird.

Gemäß einer weiteren Modifikation kann die Vermessung des Werkstücks, insbesondere die Erfassung des Breitenmaßes quer zur Durchlaufrichtung D sowie der Schräge einer noch nicht bearbeiteten Seite des Werkstücks auch außerhalb der gezeigten Maschine erfolgen. Die ermittelten Daten werden manuell in eine Steuereinrichtung der Zuführvorrichtung eingegeben, oder von dem zur Erfassung des Breitenmaßes und der Schräge verwendeten Messwerkzeug an die Steuereinrichtung übertragen.

In den vorliegenden Ausführungsformen wird ein Bearbeitungswerkzeug 11 gezeigt. Es ist jedoch ersichtlich, dass auch mehrere in Durchlaufrichtung angeordnete Bearbeitungswerkzeuge vorgesehen sein können, welche unterschiedliche Bearbeitungsvorgänge durchführen. Unter anderem können Werkzeuge zum Vorbereiten der Kantenaufbringung vorgesehen sein, beispielsweise um die mit dem Kantenmaterialstreifen K zu beschichtende Seite des Werkstücks abzuschleifen, ein Mittel zum Verschließen von Poren aufzubringen oder am Werkstück ein Haftmittel aufzubringen.

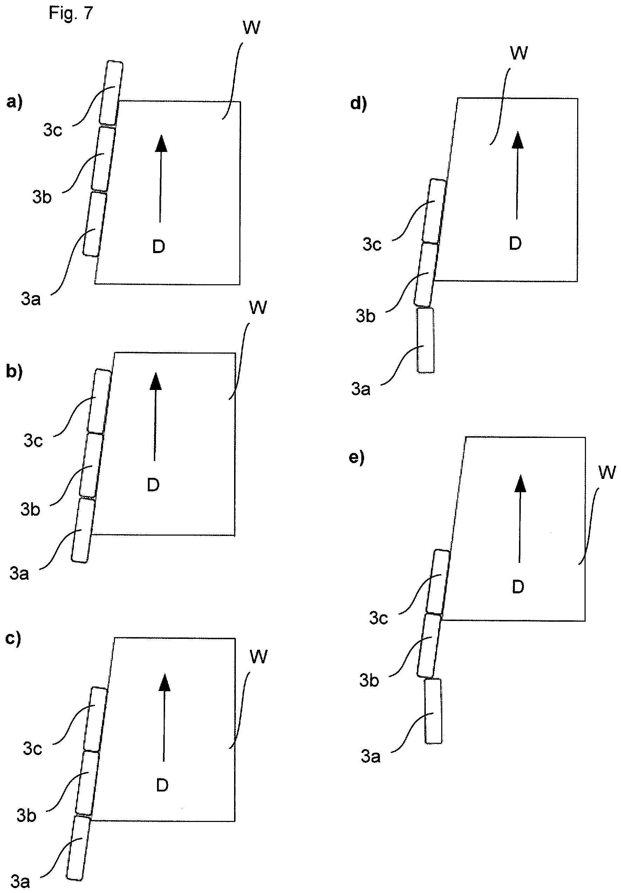

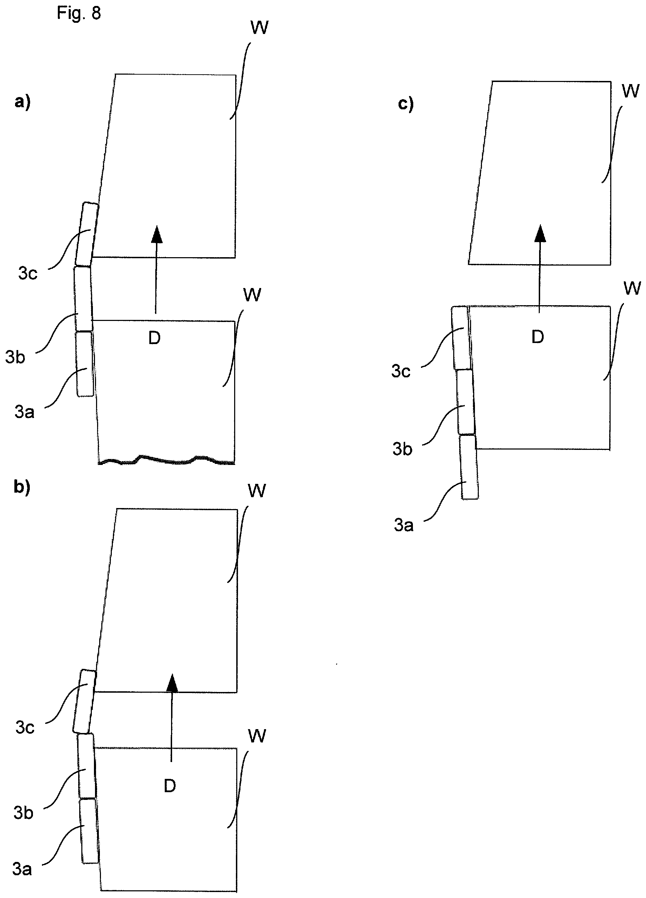

In Figuren 7 und 8 wird ein Ablauf zum Ausrichten von Werkstücken W im Bereich der Zuführvorrichtung für eine Formatbearbeitungs- und/oder Kantenaufbringmaschine im Detail gezeigt.

Zunächst kommt ein Werkstück W mit den Einlauflinealen 3a-3c in Eingriff, und wird mittels der in einer horizontalen Ebene gegenüber der Durchlaufrichtung D gedrehten Einlauflineale 3a-3c derart ausgerichtet, dass die den Einlauflinealen 3a-3c gegenüberliegende Seite des Werkstücks W parallel zur Durchlaufrichtung ausgerichtet ist. Die vorliegende Darstellung betrifft demnach den zweiten Durchlauf des Werkstücks W, bei dem die an den Einlauflinealen 3a-3c auszurichtende Seite des Werkstücks W durch den Fräser 11 formatiert wird, sodass die beiden Längsseiten des Werkstücks W nach diesem Bearbeitungsschritt in der Formatbearbeitungs- und/oder Kantenaufbringmaschine parallel zueinander verlaufen.

In den Figuren 7a-7c sind die Einlauflineale 3a-3c in einer gemeinsamen Richtung orientiert, um die Ausrichtung des Werkstücks W zu gewährleisten. Während der Bewegung des Werkstücks in Richtung der Formatbearbeitungs- und/oder Kantenaufbringmaschine gleitet dieses entlang der Einlauflineale 3a-3c.

Nachdem das Werkstück W derart weiterbewegt wurde, dass das Werkstück W vom ersten Einlauflineal 3a außer Eingriff gelangt (Fig. 7d), mit anderen Worten das erste Einlauflineal 3a das Werkstück nicht mehr berührt, kann dieses erste Einlauflineal 3a bereits neu ausgerichtet werden. Die Ausrichtung umfasst hierbei eine Drehung in einer horizontalen Ebene und/oder eine lineare Verstellbewegung in der horizontalen Ebene (siehe Figuren 7b-7e). Dabei wird das erste Einlauflineal 3a derart neu orientiert, dass es für die Ausrichtung eines nachfolgenden Werkstücks W genutzt werden kann (siehe Fig. 8a).

Auch das zweite Einlauflineal 3b ist in Fig. 8a bereits gedreht, und gelangt mit dem nachfolgenden Werkstück W in Eingriff. Dies geschieht nachfolgend ebenfalls mit dem den dritten Einlauflineal 3c, sodass die Einlauflineale 3a-3c nacheinander entlang einer imaginären Ausrichtebene orientiert sind, um die Ausrichtung des nachfolgenden Werkstücks W zu gewährleisten.

Nachdem die einzelnen Einlauflineale 3a-3c einzeln ansteuerbar und bewegbar sind, kann somit ein fließender Übergang zwischen einer Ausrichtung eines Werkstücks W und eines nachlaufenden Werkstücks W erreicht werden. Auf diese Weise ist es möglich, die Lücke zwischen den Werkstücken W in Durchlaufrichtung D äußerst gering zu halten, wodurch die Produktivität gesteigert wird.

In Fig. 9 wird eine Draufsicht auf eine Zuführvorrichtung sowie eine Formatbearbeitungs- und/oder Kantenaufbringmaschine gezeigt, wobei die in den vorangegangenen Darstellungen teilweise einzeln dargestellten Messeinrichtungen bzw. Sensoren in einer Gesamtschau abgebildet sind.

Insbesondere umfasst die dargestellte Vorrichtung die erste Messeinrichtung 20, die zur Erfassung der Werkstückbreite (Breitenmaß) und der Schräge derjenigen Seite des Werkstücks W genutzt wird, die der zu bearbeitenden bzw. zu beschichtenden Seite des Werkstücks gegenüberliegt. Die erste Messeinrichtung 20 ist vorliegend als taktiler Sensor ausgebildet.

Ferner umfasst die Vorrichtung die zweite Messeinrichtung 30, 40 mit dem ersten Sensor 30 sowie dem zweiten Sensor 40. Der Sensor 40 war in den vorangegangenen Figuren aufgrund der perspektivischen Darstellung noch nicht zu erkennen.

Der erste Sensor 30 und der zweite Sensor 40 befinden sich an einer gemeinsamen Linie senkrecht zur Durchlaufrichtung W. Der ersten Sensor 30 und der zweite Sensor 40 sind vorliegend kontaktlose Sensoren, die an äußeren Bereichen der Querseite eines Werkstücks W eine Messung bezüglich einer Schräge der Querseite im dritten Durchlauf durchführen.

Der erste Sensor 30 und der zweite Sensor 40 sind vorliegend unterhalb der Förderebene für die Werkstücke W vorgesehen, und erfassen abschnittsweise Bereiche einer Querseite eines in Durchlaufrichtung D geförderten Werkstücks W. Um die Schräge der Querseite eines Werkstücks W mit hoher Genauigkeit erfassen zu können, sind die Sensoren 30, 40 derart angeordnet, dass äußere Bereiche der Querseite der Werkstücke W erfasst werden.

Auch wenn in der vorliegenden Ausführungsform bevorzugt kontaktlose Sensoren eingesetzt werden, so können in einer weiteren Variante die Sensoren 30, 40 auch als Kontaktsensoren ausgebildet sein.

Ferner ist in der vorliegenden Ausführungsform die dritte Messeinrichtung 50 dargestellt, die für eine Messung zur Kantenkompensation eingesetzt wird. Mit der dritten Messeinrichtung 50 kann somit das Messergebnis bezüglich der Werkstückbreite, die durch die erste Messeinrichtung 20 ermittelt wird, nochmals verfeinert werden. Insbesondere können ungleichmäßige Dicken der Kantenbänder bzw. des Kantenbandstreifens K sowie sich ggf. verändernde Auftragsmengen des Haftmittels berücksichtigt werden, wobei das Haftmittel entweder auf dem Werkstück W oder auf dem Kantenbandstreifen K aufgetragen wird bzw. bereits auf vorbeschichteten Kantenbandstreifen K vorhanden ist. Die dritte Messeinrichtung 50 ist gegenüber den zuvor genannten Sensoren eine weitere optionale Messeinrichtung.

Ferner wird in der Darstellung von Fig. 9 eine weitere Variante der vierten Messeinrichtung 21' gezeigt, die in der vorliegenden Ausführungsform als Kontaktsensor ausgebildet ist. In der in Figuren 5 und 6 dargestellten Ausführungsform wurde eine kontaktlose Messeinrichtung 21 gezeigt.

Mit der dritten Messeinrichtung 21, 21' wird kurz vor der Übergabe des ausgerichteten Werkstücks W in die Formatbearbeitungs- und/oder Kantenaufbringmaschine eine Messung der Werkstückbreite und/oder Werkstückschräge durchgeführt, die ggf. zu einer Feinjustierung bei der Ausrichtung des Werkstücks W genutzt wird, kurz bevor das Werkstück W im Bereich der Formatbearbeitungs- und/oder Kantenaufbringmaschine im Durchlauf geklemmt wird.

## Patentansprüche

1. Zuführvorrichtung für eine Formatbearbeitungs- und/oder Kantenaufbringmaschine, mit:
einer Fördereinrichtung (1) zum Bewegen eines Werkstücks in einer Durchlaufrichtung (D) und einem Einzugsmechanismus, insbesondere Einzugsrollen (2),
wobei benachbart zur Fördereinrichtung (1) zumindest ein Einlauflineal (3a-3c) angeordnet ist,
**dadurch gekennzeichnet, dass** das zumindest eine Einlauflineal (3a-3c) in einer horizontalen Richtung verstellbar und in einer horizontalen Ebene zur Durchlaufrichtung (D) drehbar ist.

2. Zuführvorrichtung gemäß Anspruch 1, **dadurch gekennzeichnet, dass** eine Steuereinrichtung eingerichtet ist, das zumindest eine Einlauflineal (3a-3c) gemäß einer in einem vorangegangen Durchlauf des Werkstücks (W) ermittelten Breite horizontal zu verstellen und gemäß einer in einem vorangegangen Durchlauf des Werkstücks (W) ermittelten Schräge in der horizontalen Ebene zu drehen.

3. Zuführvorrichtung gemäß Anspruch 2, **dadurch gekennzeichnet, dass** die Steuereinrichtung eingerichtet ist, das zumindest eine Einlauflineal (3a-3c) nach Ausrichtung eines Werkstücks (W) in Abhängigkeit von der Fördergeschwindigkeit des Werkstücks (W) zu führen, insbesondere das zumindest eine Einlauflineal (3a-3c) in horizontaler Richtung zu verstellen.

4. Zuführvorrichtung gemäß einem der vorangegangenen Ansprüche, **dadurch gekennzeichnet, dass** mehrere, insbesondere drei, jeweils in einer horizontalen Richtung verstellbare und zur Durchlaufrichtung (D) in der horizontalen Ebene drehbare Einlauflineale (3a-3c) vorgesehen sind.

5. Zuführvorrichtung gemäß einem der vorangegangenen Ansprüche, **dadurch gekennzeichnet, dass** die Zuführvorrichtung ferner eine erste Messeinrichtung (20) umfasst, die eingerichtet ist, ein Breitenmaß eines Werkstücks (W) und eine Schräge einer Seite des Werkstücks (W) längs zur Durchlaufrichtung (D) zu erfassen.

6. Zuführvorrichtung gemäß einem der vorangegangenen Ansprüche, **dadurch gekennzeichnet, dass** die Zuführvorrichtung ferner eine zweite Messeinrichtung (30, 40) umfasst, die eingerichtet ist, die Schräge einer Seite des Werkstücks quer zur Durchlaufrichtung (D) zu erfassen, wobei die zweite Messeinrichtung bevorzugt einen ersten Sensor (30) und einen zweiten Sensor (40) umfasst, die entlang einer senkrecht zur Durchlaufrichtung (D) verlaufenden, imaginären Linie angeordnet sind.

7. Zuführvorrichtung gemäß einem der vorangegangenen Ansprüche, **dadurch gekennzeichnet, dass** die Zuführvorrichtung eine dritte Messeinrichtung (50) umfasst, die eingerichtet ist, die Werkstückbreite nach Bearbeitung einer Seite des Werkstücks (W), insbesondere nach einer spanenden Bearbeitung und/oder einem Kantenaufbringen, zu ermitteln.

8. Zuführvorrichtung gemäß einem der vorangegangenen Ansprüche, **dadurch gekennzeichnet, dass** die Zuführvorrichtung eine vierte Messvorrichtung (21, 21') umfasst, die eingerichtet ist, eine Werkstückbreite und/oder eine Schräge einer Seite des Werkstücks (W) längs zur Durchlaufrichtung (D) zu erfassen, wobei die vierte Messeinrichtung in einem Bereich angeordnet ist, bevor das Werkstück (W) der Formatbearbeitungs- und/oder Kantenaufbringmaschine übergeben wird.

9. Formatbearbeitungs- und/oder Kantenaufbringmaschine mit einer Zuführvorrichtung gemäß einem der vorangegangenen Ansprüche und einem Bearbeitungswerkzeug (11), insbesondere einem Fräser, wobei das Bearbeitungswerkzeug (11) an der gleichen Seite der Fördereinrichtung (1) angeordnet ist wie das zumindest eine Einlauflineal (3a-3c).

10. Formatbearbeitungs- und/oder Kantenaufbringmaschine gemäß Anspruch 9, ferner umfassend eine Kantenaufbringstation (12) zum Aufbringen eines Kantenmaterialstreifens (K), die an der gleichen Seite der Fördereinrichtung (1) angeordnet ist wie das zumindest eine Einlauflineal (3a-3c).

11. Verfahren zum Zuführen eines Werkstücks (W) zu einer Bearbeitungsmaschine, insbesondere einer Formatbearbeitungs- und/oder Kantenaufbringmaschine, wobei das Verfahren die folgenden Schritte umfasst:
Fördern eines Werkstücks (W) in einem ersten Durchlauf, wobei das Werkstück (W) an zumindest einem Einlauflineal (3a-3c) ausgerichtet und nachfolgend einer Bearbeitung, insbesondere mit einem Bearbeitungswerkzeug (11) und/oder einer Kantenaufbringstation (12), zugeführt wird, **dadurch gekennzeichnet, dass** ein Breitenmaß des Werkstücks (D) und einer Schräge einer Seite des Werkstücks (W) längs zur Durchlaufrichtung (D) erfassen werden, und Fördern des Werkstücks (W) in einer um 180 Grad gedrehten Ausrichtung in einem zweiten Durchlauf, wobei das zumindest eine Einlauflineal (3a-3c) gemäß dem im ersten Durchlauf ermittelten Breitenmaß verstellt und der ermittelten Schräge in einer horizontalen Ebene gedreht wird, und das Werkstück (W) am zumindest einen Einlauflineal (3a-3c) ausgerichtet wird.

12. Verfahren gemäß Anspruch 11, beim dem das zumindest eine Einlauflineal (3a-3c) das Werkstück (W) in Abhängigkeit von der Fördergeschwindigkeit des Werkstücks (W) führt, insbesondere das zumindest eine Einlauflineal (3a-3c) in horizontaler Richtung verstellt wird, bevor das Werkstück einer Formatbearbeitungs- und/oder Kantenaufbringmaschine übergeben wird.

13. Verfahren gemäß einem der Ansprüche 11-12, bei im zweiten Durchlauf mittels einer zweiten Messeinrichtung (30, 40) eine Schräge einer Querseite des Werkstücks (W) erfasst wird, wobei die zweite Messeinrichtung bevorzugt einen ersten Sensor (30) und einen zweiten Sensor (40) umfasst, die entlang einer senkrecht zur Durchlaufrichtung (D) verlaufenden, imaginären Linie angeordnet sind.

14. Verfahren gemäß Anspruch 13, ferner umfassend einen dritten Durchlauf, bei dem das zumindest eine Einlauflineal (3a-3c) gemäß der im zweiten Durchlauf ermittelten Schräge in der horizontalen Ebene gedreht und das Werkstück (W) am zumindest einen Einlauflineal (3a-3c) ausgerichtet wird, wobei im dritten Durchlauf mittels einer ersten Messeinrichtung (20) ein Breitenmaß sowie eine Schräge des Werkstücks (W) ermittelt wird.

15. Verfahren gemäß einem der Ansprüche 11-13, ferner umfassend einen vierten Durchlauf, bei dem das zumindest eine Einlauflineal (3a-3c) gemäß der im dritten Durchlauf ermittelten Schräge in der horizontalen Ebene gedreht wird, und das Werkstück (W) an dem zumindest einen Einlauflineal (3a-3c) ausgerichtet wird.

## Claims

1. Feed apparatus for a sizing and/or edging machine, having:
a conveying device (1) for moving a workpiece in a direction of through-travel (D) and an intake mechanism, in particular intake rollers (2),
wherein adjacent to the conveying device (1) is arranged at least one infeed fence (3a-3c),
**characterised in that** the at least one infeed fence (3a-3c) is displaceable in a horizontal direction and rotatable in a horizontal plane to the direction of through-travel (D).

2. Feed apparatus according to claim 1, **characterised in that** a control device is designed to horizontally displace the at least one infeed fence (3a-3c) according to a width determined in a previous pass of the workpiece (W) and to rotate it in the horizontal plane according to a gradient determined in a previous pass of the workpiece (W).

3. Feed apparatus according to claim 2, **characterised in that** the control device is designed to guide the at least one infeed fence (3a-3c) after alignment of a workpiece (W) as a function of the speed of conveying the workpiece (W), and in particular to displace the at least one infeed fence (3a-3c) in a horizontal direction.

4. Feed apparatus according to any of the preceding claims, **characterised in that** a plurality of infeed fences (3a-3c) are provided, in particular three, each displaceable in a horizontal direction and rotatable in the horizontal plane to the direction of through-travel (D).

5. Feed apparatus according to any of the preceding claims, **characterised in that** the feed apparatus further comprises a first measuring device (20) which is designed to detect a width dimension of a workpiece (W) and a gradient of one side of the workpiece (W) longitudinally to the direction of through-travel (D).

6. Feed apparatus according to any of the preceding claims, **characterised in that** the feed apparatus further comprises a second measuring device (30, 40) which is designed to detect the gradient of one side of the workpiece transversely to the direction of through-travel (D), wherein the second measuring device preferably comprises a first sensor (30) and a second sensor (40) which are arranged along an imaginary line running perpendicularly to the direction of through-travel (D).

7. Feed apparatus according to any of the preceding claims, **characterised in that** the feed apparatus comprises a third measuring device (50) which is designed to determine the workpiece width after processing one side of the workpiece (W), in particular after machining and/or edging.

8. Feed apparatus according to any of the preceding claims, **characterised in that** the feed apparatus comprises a fourth measuring device (21, 21') which is designed to detect a workpiece width and/or a gradient of one side of the workpiece (W) longitudinally to the direction of through-travel (D), wherein the fourth measuring device is arranged in a region before the workpiece (W) is delivered to the sizing and/or edging machine.

9. Sizing and/or edging machine having a feed apparatus according to any of the preceding claims and a processing tool (11), in particular a milling cutter, wherein the processing tool (11) is arranged on the same side of the conveying device (1) as the at least one infeed fence (3a-3c).

10. Sizing and/or edging machine according to claim 9, further comprising an edging station (12) for applying a strip of edge material (K), which is arranged on the same side of the conveying device (1) as the at least one infeed fence (3a-3c).

11. Method for feeding a workpiece (W) to a processing machine, in particular a sizing and/or edging machine, wherein the method comprises the following steps:
conveying a workpiece (W) in a first pass, wherein the workpiece (W) is aligned on at least one infeed fence (3a-3c) and is then fed to a processing means, in particular with a processing tool (11) and/or an edging station (12), **characterised in that** a width dimension of the workpiece (D) and a gradient of one side of the workpiece (W) longitudinally to the direction of through-travel (D) are detected, and
conveying the workpiece (W) in an orientation rotated through 180 degrees in a second pass, wherein the at least one infeed fence (3a-3c) is displaced according to the width dimension determined in the first pass and rotated in a horizontal plane according to the gradient determined, and the workpiece (W) is aligned on the at least one infeed fence (3a-3c).

12. Method according to claim 11, in which the at least one infeed fence (3a-3c) guides the workpiece (W) as a function of the speed of conveying the workpiece (W), and in particular the at least one infeed fence (3a-3c) is displaced in a horizontal direction before the workpiece is delivered to a sizing and/or edging machine.

13. Method according to either of claims 11-12, in which in the second pass by means of a second measuring device (30, 40) a gradient of a transverse side of the workpiece (W) is detected, wherein the second measuring device preferably comprises a first sensor (30) and a second sensor (40) which are arranged along an imaginary line running perpendicularly to the direction of through-travel (D).

14. Method according to claim 13, further comprising a third pass in which the at least one infeed fence (3a-3c) is rotated in the horizontal plane according to the gradient determined in the second pass and the workpiece (W) is aligned on the at least one infeed fence (3a-3c), wherein in the third pass by means of a first measuring device (20) a width dimension and a gradient of the workpiece (W) are determined.

15. Method according to any of claims 11-13, further comprising a fourth pass in which the at least one infeed fence (3a-3c) is rotated in the horizontal plane according to the gradient determined in the third pass, and the workpiece (W) is aligned on the at least one infeed fence (3a-3c).

## Revendications

1. Dispositif d'amenée pour une machine de façonnage et/ou de plaquage de chant, avec :
un dispositif de transport (1) pour déplacer une pièce dans une direction de passage (D) et dans un mécanisme d'alimentation, notamment dans des rouleaux d'alimentation (2),
au moins une règle d'entrée (3a à 3c) étant agencée au voisinage du dispositif de transport (1),
**caractérisé en ce que** l'au moins une règle d'entrée (3a à 3c) peut être déplacée dans une direction horizontale et peut être tournée par rapport à la direction de passage (D) dans un plan horizontal.

2. Dispositif d'amenée selon la revendication 1, **caractérisé en ce qu'**un dispositif de commande est prévu pour déplacer horizontalement l'au moins une règle d'entrée (3a à 3c) selon une largeur déterminée lors d'un passage précédent de la pièce (W) et pour la tourner dans le plan horizontal suivant une direction oblique déterminée lors d'un passage précédent de la pièce (W).

3. Dispositif d'amenée selon la revendication 2, **caractérisé en ce que** le dispositif de commande est prévu pour guider l'au moins une règle d'entrée (3a à 3c) après l'alignement d'une pièce (W) en fonction de la vitesse de transport de la pièce (W), notamment pour déplacer l'au moins une règle d'entrée (3a à 3c) en direction horizontale.

4. Dispositif d'amenée selon l'une des revendications précédentes, **caractérisé en ce qu'**il est prévu plusieurs, notamment trois, règles d'entrée (3a à 3c) qui peuvent à chaque fois être déplacées dans une direction horizontale et être tournées par rapport à la direction de passage (D) dans le plan horizontal.

5. Dispositif d'amenée selon l'une des revendications précédentes, **caractérisé en ce que** le dispositif d'amenée comprend en plus un premier dispositif de mesure (20) qui est prévu pour détecter une largeur d'une pièce (W) et un biseau d'un côté de la pièce (W) le long de la direction de passage (D).

6. Dispositif d'amenée selon l'une des revendications précédentes, **caractérisé en ce que** le dispositif d'amenée comprend en plus un deuxième dispositif de mesure (30, 40) qui est prévu pour détecter le biseau d'un côté de la pièce transversalement par rapport à la direction de passage (D), le deuxième dispositif de mesure comprenant de préférence un premier capteur (30) et un deuxième capteur (40) qui sont agencés le long d'une ligne imaginaire qui s'étend perpendiculairement à la direction de passage (D).

7. Dispositif d'amenée selon l'une des revendications précédentes, **caractérisé en ce que** le dispositif d'amenée comprend un troisième dispositif de mesure (50) qui est prévu pour déterminer la largeur de pièce après l'usinage d'un côté de la pièce (W), notamment après un usinage par enlèvement de copeaux et/ou après un plaquage de chant.

8. Dispositif d'amenée selon l'une des revendications précédentes, **caractérisé en ce que** le dispositif d'amenée comprend un quatrième dispositif de mesure (21, 21') qui est prévu pour détecter une largeur de pièce et/ou un biseau d'un côté de la pièce (W) le long de la direction de passage (D), le quatrième dispositif de mesure étant agencé dans une zone avant que la pièce (W) soit transférée à la machine de façonnage et/ou de plaquage de chant.

9. Machine de façonnage et/ou de plaquage de chant avec un dispositif d'amenée selon l'une des revendications précédentes et avec un outil d'usinage (11), notamment une fraise, l'outil d'usinage (11) étant agencé du même côté du dispositif de transport (1) que l'au moins une règle d'entrée (3a à 3c).

10. Machine de façonnage et/ou de plaquage de chant selon la revendication 9, qui comprend en outre un poste de plaquage de chant (12) qui est destiné à plaquer une bande de matériau de chant (K) et qui est agencé du même côté du dispositif de transport (1) que l'au moins une règle d'entrée (3a à 3c).

11. Procédé pour amener une pièce (W) à une machine d'usinage, notamment à une machine de façonnage et/ou de plaquage de chant, lequel procédé comprend les étapes suivantes :
transport d'une pièce (W) lors d'un premier passage, la pièce (W) étant alignée sur au moins une règle d'entrée (3a à 3c) puis étant envoyée à un usinage, notamment à un outil d'usinage (11) et/ou à un poste de plaquage de chant (12),
**caractérisé en ce que**
on détecte une largeur de la pièce (D) et un biseau d'un côté de la pièce (W) le long de la direction de passage (D) et
on transporte la pièce (W) dans une orientation tournée de 180 degrés lors d'un deuxième passage, l'au moins une règle d'entrée (3a à 3c) étant déplacée selon la largeur déterminée lors du premier passage et étant tournée dans un plan horizontal suivant le biseau déterminé, et on aligne la pièce (W) sur l'au moins une règle d'entrée (3a à 3c).

12. Procédé selon la revendication 11, dans lequel l'au moins une règle d'entrée (3a à 3c) guide la pièce (W) en fonction de la vitesse de transport de la pièce (W), notamment dans lequel l'au moins une règle d'entrée (3a à 3c) est déplacée dans la direction horizontale, avant que la pièce soit transférée à une machine de façonnage et/ou de plaquage de chant.

13. Procédé selon l'une des revendications 11 à 12, dans lequel on détecte lors d'un deuxième passage un biseau d'un côté transversal de la pièce (W) au moyen d'un deuxième dispositif de mesure (30, 40), le deuxième dispositif de mesure comprenant de préférence un premier capteur (30) et un deuxième capteur (40) qui sont agencés le long d'une ligne imaginaire qui s'étend perpendiculairement à la direction de passage (D).

14. Procédé selon la revendication 13, comprenant en outre un troisième passage lors duquel on tourne l'au moins une règle d'entrée (3a à 3c) dans le plan horizontal suivant le biseau déterminé lors du deuxième passage et on aligne la pièce (W) sur l'au moins une règle d'entrée (3a à 3c), une largeur ainsi qu'un biseau de la pièce (W) étant déterminés lors d'un troisième passage au moyen d'un premier dispositif de mesure (20).

15. Procédé selon l'une des revendications 11 à 13, comprenant en outre un quatrième passage lors duquel on tourne l'au moins une règle d'entrée (3a à 3c) dans le plan horizontal suivant le biseau déterminé lors du troisième passage et on aligne la pièce (W) sur l'au moins une règle d'entrée (3a à 3c).
